# EUROPÄISCHE PATENTSCHRIFT

(11) **EP 1 722 464 B1**
(45) Veröffentlichungstag und Bekanntmachung des Hinweises auf die Patenterteilung: **08.05.2019**
(21) Anmeldenummer: 05010261.5
(22) Anmeldetag: 11.05.2005
(51) Int. Cl.: H02K 15/00

(54) **Verfahren zum Bewickeln des Stators eines Elektromotors und Stator für einen Elektromotor**
Method for winding a stator of an electric motor and stator for an electric motor
Méthode pour bobiner un stator de moteur électrique et stator de moteur électrique

(43) Veröffentlichungstag der Anmeldung: 15.11.2006
(60) Teilanmeldung: 17202245.1
(73) Patentinhaber: Brose Fahrzeugteile GmbH & Co. KG, Würzburg, 97076 Würzburg (DE)
(72) Erfinder: Baumgartner, Joachim, 97332 Volkach (DE); Buban, Tobias, 97218 Gerbrunn (DE)
(74) Vertreter: Isarpatent

(56) Entgegenhaltungen:
- WO-A1-2005/034307
- DE-A1- 10 213 743
- DE-A1- 10 337 916
- DE-U1- 20 300 478
- US-A1- 2003 102 765
- US-A1- 2004 183 388

## Beschreibung

Die Erfindung betrifft ein Verfahren zum Bewickeln des Stators eines Elektromotors sowie einen Stator für einen Elektromotor.

Es ist bereits bekannt, die Statorwicklung eines bürstenlosen Elektromotors im Sinne einer Dreieckschaltung zu realisieren. Bei der Bewicklung der Zähne des Stators wird der Draht bei jeder neuen Zahnwicklung abgetrennt und unter Verwendung einer zusätzlichen Komponente, beispielsweise eines Stanzgitters, eines Steckers oder eines Kabelstranges elektrisch verschaltet.

Aus der DE 100 45 471 A1 ist ein Stator für Elektromotoren bekannt, bei dem eine aus mehreren Wicklungssträngen bestehende Statorwicklung in die Statornuten eines Statorkernes eingezogen ist. Die die Nut verlassenden Drahtanfänge und Drahtenden der einzelnen Wicklungsstränge sind direkt an mindestens eine am Statorkern befestigte Kontaktiereinrichtung geführt und mit dieser verbunden. Alle Anschlussenden der Wicklungsstränge verlassen die Statornuten am Nutgrund. Weiterhin ist am Stator ein Verschaltungsträger angeordnet, der zur berührungsfreien Führung der Anschlussenden zu der bzw. den Kontaktiereinrichtungen vorgesehen ist. Bei der Fertigung des bekannten Motors werden die einzelnen Spulenstränge zunächst auf Schablonen gewickelt. Danach werden die fertig gewickelten Spulen nach einem Entfernen der Schablonen gemeinsam in die isolierten Nuten des Statorkernes eingezogen. Nach diesem Einziehen erfolgt mittels eines Hakens eine manuelle Positionierung der Anschlussenden in den Nutgrund. Nach einer Übergabe der Enden in eine Verleghilfe erfolgt eine maschinelle Verlegung der Drahtanfänge und Enden zu einer Kontaktiervorrichtung, in welcher mittels einer Schneid-Klemmtechnik eine elektrische Kontaktierung der Drahtanfänge und Enden mit externen Motoranschlüssen bzw. eine interne Verschaltung der Wicklungsstränge erfolgt.

Aus der US 2004/0183388 A1 ist bereits ein Verfahren bekannt, gemäß welchem ein Bewickeln des Stators eines mehrphasigen Elektromotors erfolgt, bei welchem jeder Phase mehrere voneinander beabstandete Statorzähne zugeordnet sind, wobei alle Zähne des Stators ohne eine Unterbrechung des Wickeldrahtes bewickelt werden und wobei der Wickeldraht vor oder nach der Bewicklung der einer Phase zugeordneten Statorzähne über ein Kontaktierelement einer Kontaktiervorrichtung geführt wird.

Aus der DE 102 13 743 A1 ist ein Stator für einen Elektromotor bekannt, welcher ein Statorblechpaket mit einer Anzahl von Statornuten und Statorzähnen zur Aufnahme von Statorwicklungen sowie eine Verschaltungsanordnung zum Verschalten von Wicklungsdrähten der Statorwicklungen aufweist. Die um die Statorzähne durch die Statornuten gewickelten Statorwicklungen überragen auf beiden Stirnseiten das Statorblechpaket mit einem Wickelkopf. Die Verschaltungsanordnung besteht aus Wicklungskontaktelementen und Verschaltungskontaktelementen. Zumindest die Verschaltungskontaktelemente sind auf einer Stirnseite des Statorblechpaketes im Wesentlichen innerhalb eines von den Statorwicklungen und einer vom Wickelkopf definierten Ebene begrenzten Raums angeordnet, wobei die Wicklungskontaktelemente den Statorzähnen bzw. Statornuten derart als statorseitig ortsfeste Wickelstützpunkte zugeordnet sind, dass die Statorwicklungen in einem kontinuierlichen Wickelvorgang auf die Statorzähne und jeweils mit den Wicklungsdrähten über die Wicklungskontaktelemente wickelbar sind. Dabei bewirkt jedes Verschaltungskontaktelement eine elektrische Verbindung der Wicklungskontaktelemente einer bestimmten Gruppe.

Weiterhin ist aus der US 2003/0102765 A1 ein Elektromotor bekannt, bei welchem alle Wicklungen des Stators in einem einzigen kontinuierlichen Wicklungsprozess aufgebracht werdnen. Der Anfangs- und der Endpunkt des Wicklungsdrahtes werden auf demselben Kontaktpunkt zur Bildung einer Sternwicklung zusammengeführt.

Aus der DE 103 37 916 A1 ist ein Verfahren zum Wickeln eines Reluktanzmotors mit einem Rotor und einem Stator mit gerader Anzahl von Statorspulen. Dabei wird in einem ersten Schritt die Hälfte der Statorspulen gleichzeitig gewickelt und in einem zweiten Schritt ohne Durchtrennung der Wicklungsdrähte die zweite Hälfte der Statorspulen. Die Wicklungsdrähte werden dabei von bzw. zu einem Anschlussstecker geführt.

Die WO 2005/034307 beschreibt einen bürstenlosen Motor mit parallelen Wicklungen, wobei für jede Phase zunächst ein erster Satz Wicklungen gewickelt und zwischen den Phasen jeweils radial innerhalb der Wicklungen kontaktiert wird und anschließend für jede Phase ein zweiter Satz Wicklungen gewickelt und zwischen den Phasen jeweils radial innerhalb der Wicklungen kontaktiert wird.

Die DE 203 00 478 U1 beschreibt einen ähnlichen Motor mit parallelen Wicklungen.

Die Aufgabe der Erfindung besteht darin, das Bewickeln eines Stators zu vereinfachen.

Diese Aufgabe wird durch ein Verfahren mit den im Anspruch 1 angegebenen Merkmalen sowie einen Stator mit den im Anspruch 3 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass beim Bewickeln der Zähne eines Stators der Wickeldraht in einem Arbeitsgang ohne eine wiederholte Durchtrennung um alle Zähne des Stators geführt werden kann. Es bedarf keiner zusätzlichen Komponenten, mittels derer durchtrennte Drahtstücke wieder miteinander verschaltet werden müssen.

Die interne und externe elektrische Kontaktierung der einzelnen Phasen erfolgt unter Verwendung von Kontaktierelementen, welche Bestandteile einer außerhalb des Statorkernes angeordneten Kontaktiervorrichtung sind. Bei diesen Kontaktierelementen handelt es sich vorzugsweise um elektrisch leitfähige Haken, um welche der Wickeldraht beim Wickelvorgang gelegt wird. Die elektrische Kontaktierung der leitfähigen Seele des Wickeldrahtes mit dem jeweiligen Haken erfolgt nach einer Fertigstellung des gesamten Wickelvorganges beispielsweise durch ein Verschweißen, bei welchem die Ummantelung des Wickeldrahtes geschmolzen wird.

Die Haken sind vorzugsweise jeweils über eine Leiterbahn mit einem Kontaktelement für einen Gegenkontakt verbunden, beispielsweise für einen Gegenstecker.

Die Haken, Leiterbahnen und Kontaktelemente sind vorzugsweise auf einem Kunststoffträger angeordnet, der zusammen mit der Isolierendscheibe des Stators ein einstückiges Kunststoffformteil bildet.

Die Isolierendscheibe weist senkrecht nach oben gerichtete Zähne auf, durch deren Zwischenräume der Wickeldraht geführt ist. Dadurch werden gesonderte Umlenkelemente auf der Isolierendscheibe entbehrlich.

Weitere vorteilhafte Eigenschaften der Erfindung ergeben sich aus deren beispielhafter Erläuterung anhand der Figuren. Es zeigt
- Figur 1: eine Draufsicht auf einen Stator im teilbewickelten Zustand,
- Figur 2: eine perspektivische Skizze zur Veranschaulichung des in Figur 1 dargestellten Stators,
- Figur 3: eine detailliertere Darstellung eines Teilbereichs des Stators im vollständig bewickelten Zustand,
- Figur 4: eine vergrößerte Darstellung der Kontaktiervorrichtung 5 des Stators und
- Figur 5: eine perspektivische Skizze zur Veranschaulichung des Stators im vollständig bewickelten Zustand.

Gegenstand der Erfindung sind ein Verfahren zum Bewickeln des Stators eines Elektromotors sowie ein Stator für einen Elektromotor. Bei diesem Elektromotor handelt es sich beispielsweise um einen dreiphasigen Elektromotor, der insgesamt drei Phasenstränge aufweist.

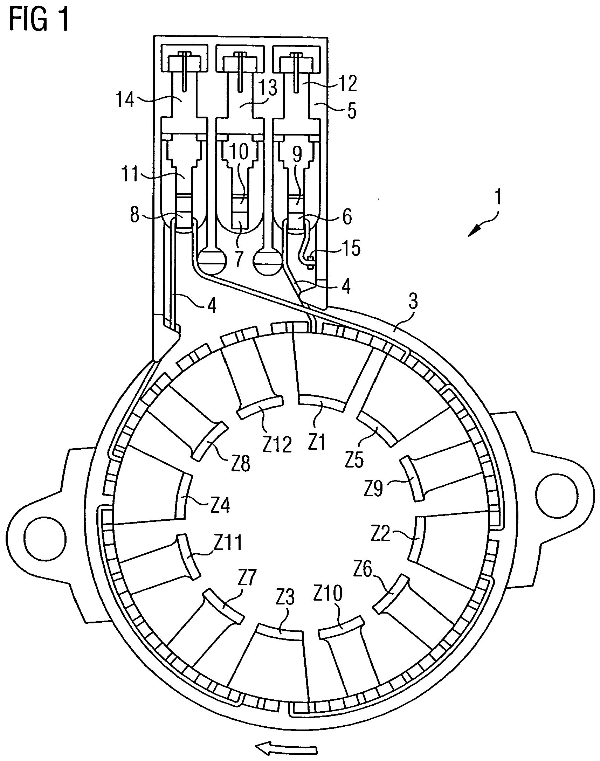

Zur Veranschaulichung der Erfindung ist in der Figur 1 zunächst eine Draufsicht auf einen Stator im teilbewickelten Zustand gezeigt. Ein Stator gemäß der Erfindung weist einen Statorkern auf, auf dessen Oberseite eine Isolierendscheibe 3 angeordnet ist. Der Statorkern weist einen im Wesentlichen kreisförmigen Querschnitt auf. Die Isolierendscheibe 3 bildet zusammen mit einer Kontaktiervorrichtung 5 ein einstückiges Kunststoffformteil. Die Kontaktiervorrichtung 5 ist in Radialrichtung außerhalb des Statorkerns angeordnet. Weiterhin ist der Stator mit Zähnen Z1, ..., Z12 versehen, die sich vom Statorkern nach innen erstrecken und einen zylinderförmigen Innenbereich freilassen, innerhalb dessen sich im Betrieb der nicht gezeichnete Rotor des Motors dreht.

Auf der Kontaktiervorrichtung 5 sind elektrisch leitfähige Kontaktelemente 6, 7 und 8 befestigt, bei denen es sich um metallische Haken handelt. Diese Haken 6, 7 und 8 sind elektrisch voneinander isoliert und jeweils über eine elektrische Leiterbahn 9, 10, 11 mit einem Anschluss 12, 13, 14 für einen Gegenkontakt verbunden. Über diese Anschlüsse 12, 13, 14 ist der dargestellte Stator mit einem nicht gezeichneten Gegenstecker verbindbar.

Beim gezeigten Ausführungsbeispiel wird ein dreiphasiger Elektromotor realisiert, bei welchem die drei Phasenstränge der Statorwicklung in Form einer Dreieckschaltung verschaltet sind. Der ersten Phase sind dabei die Zähne Z1, Z2, Z3 und Z4, der zweiten Phase die Zähne Z5, Z6, Z7 und Z8, der dritten Phase die Zähne Z9, Z10, Z11 und Z12 zugeordnet.

In der Figur 1 ist der Stator im teilbewickelten Zustand gezeigt, in welchem die der ersten Phase zugehörigen Zähne Z1, Z2, Z3 und Z4 sowie der der zweiten Phase zugehörige Zahn Z5 bewickelt sind. Die weiteren Zähne Z6 bis Z12 sind noch nicht bewickelt.

Diese bisherige Bewicklung des Stators wird wie folgt erreicht:
Zunächst wird ein Ende des aus einem elektrisch nicht leitfähigen Mantel und einer elektrisch leitfähigen Seele bestehenden Wickeldrahtes 4 wahlweise an einem Befestigungselement 15 befestigt, welches Bestandteil der Kontaktiervorrichtung 5 ist oder auf dieser befestigt ist, oder in der Vorrichtung gehalten.

Danach wird der Wickeldraht 4 um das Kontaktierelement 6 gelegt, bei welchem es sich um einen elektrisch leitfähigen, metallischen Haken handelt.

Von dort aus wird der Wickeldraht 4 zwischen zwei senkrecht auf der Isolierendscheibe 3 stehenden Zähnen hindurch zum Statorzahn Z1 geführt und auf diesem aufgewickelt. Ist der Statorzahn Z1 bewickelt, dann wird der Wickeldraht 4 durch zwei weitere senkrecht auf der Isolierendscheibe 3 stehende Zähne hindurch nach außen geführt, umgelenkt und auf der Außenseite der senkrecht auf der Isolierendscheibe 3 stehenden Zähne bis in den Bereich des Statorzahns Z2 geführt, der ebenfalls der ersten Phase zugeordnet ist.

Dort wird der Wickeldraht 4 erneut zwischen zwei der senkrecht auf der Isolierendscheibe 3 stehenden Zähne hindurch zum Statorzahn Z2 geführt und auf diesem aufgewickelt. Ist der Statorzahn Z2 bewickelt, dann wird der Wickeldraht 4 durch zwei weitere senkrecht auf der Isolierendscheibe 3 stehende Zähne hindurch nach außen geführt, umgelenkt und auf der Außenseite der senkrecht auf der Isolierendscheibe 3 stehenden Zähne bis in den Bereich des Statorzahns Z3 geführt, der ebenfalls der ersten Phase angehört.

Dort wird der Wickeldraht 4 erneut zwischen zwei der senkrecht auf der Isolierendscheibe 3 stehenden Zähne hindurch zum Statorzahn Z3 geführt und auf diesem aufgewickelt. Ist der Statorzahn Z3 bewickelt, dann wird der Wickeldraht 4 durch zwei weitere senkrecht auf der Isolierendscheibe 3 stehende Zähne hindurch wieder nach außen geführt, umgelenkt und auf der Außenseite der senkrecht auf der Isolierendscheibe 3 stehenden Zähne bis in den Bereich des Statorzahns Z4 geführt, der ebenfalls der ersten Phase angehört.

Dort wird der Wickeldraht 4 erneut zwischen zwei der senkrecht auf der Isolierendscheibe 3 stehenden Zähne hindurch zum Statorzahn Z4 geführt und auf diesem aufgewickelt. Ist der Statorzahn Z4 bewickelt, dann wird der Wickeldraht 4 durch zwei weitere senkrecht auf der Isolierendscheibe 3 stehende Zähne hindurch wieder nach außen geführt, womit die erste Phasenwicklung fertig gestellt ist.

Danach wird der Wickeldraht 4 ohne eine Unterbrechung desselben zum Kontaktierelement 8 geführt, bei welchem es sich ebenfalls um einen elektrisch leitfähigen, metallischen Haken handelt, und um diesen gelegt.

Von dort aus wird der Wickeldraht 4 an der Außenseite der senkrecht auf der Isolierendscheibe 3 stehenden Zähne bis in den Bereich des Statorzahns Z5 geführt, der der zweiten Phase angehört. Dort wird der Wickeldraht 4 zwischen zwei der senkrecht auf der Isolierendscheibe stehenden Zähne hindurch zum Statorzahn Z5 geführt und auf diesem aufgewickelt. Ist der Statorzahn Z5 bewickelt, dann wird der Wickeldraht 4 durch zwei weitere senkrecht auf der Isolierendscheibe stehende Zähne hindurch nach außen geführt, umgelenkt und auf der Außenseite der senkrecht auf der Isolierendscheibe stehenden Zähne bis in den Bereich des Statorzahns Z6 geführt.

Die Bewicklung der weiteren Statorzähne Z6, Z7 und Z8 der zweiten Phase sowie die darauf folgende Bewicklung der Statorzähne Z9, Z10, Z11 und Z12, die aus der Figur 1 nicht ersichtlich ist, erfolgt anschließend auf dieselbe Weise wie die Bewicklung der Statorzähne Z1 - Z5. Dabei ist jedoch darauf zu achten, dass nach der Fertigstellung der zweiten Phasenwicklung der Wickeldraht vom Statorzahn Z8 aus über das in Form eines elektrischen leitfähigen, metallischen Hakens realisierten Kontaktierelement 7 geführt, um dieses gelegt, und dann an der Außenseite der senkrecht auf der Isolierendscheibe 3 stehenden Zähne entlang bis in den Bereich des Statorzahns Z9 geführt wird, der der dritten Phase zugeordnet ist. Weiterhin muss der Wickeldraht nach Fertigstellung der dritten Phasenwicklung vom Statorzahn Z12 aus wieder zum ersten Kontaktierelement 6 zurückgeführt und dort befestigt werden.

Beim vorstehend beschriebenen Ausführungsbeispiel wird folglich zunächst ein Ende des Wickeldrahtes 4 an einem Befestigungselement 15 befestigt, welches auf einer Kontaktiervorrichtung 5 vorgesehen ist, oder in der Vorrichtung gehalten. Dann wird der Wickeldraht über ein erstes Kontaktierelement 6 der Kontaktiervorrichtung 5 geführt. Anschließend wird der Wickeldraht 4 über die der ersten Phase zugeordneten Statorzähne Z1, Z2, Z3 und Z4 geführt, wobei diese Statorzähne einzeln nacheinander mittels des Wickeldrahtes 4 umwickelt werden. Danach wird der Wickeldraht 4 über ein zweites Kontaktierelement 8 der Kontaktiervorrichtung 5 geführt, welches vom ersten Kontaktierelement 6 elektrisch isoliert ist. Anschließend erfolgt ein Führen des Wickeldrahtes 4 über die der zweiten Phase zugeordneten Statorzähne Z5, Z6, Z7 und Z8, wobei diese Statorzähne einzeln nacheinander mittels des Wickeldrahtes 4 umwickelt werden. Danach wird der Wickeldraht 4 über ein drittes Kontaktierelement 7 der Kontaktiervorrichtung 5 geführt, welches vom ersten und zweiten Kontaktelement 6 bzw. 8 elektrisch isoliert ist. Anschließend erfolgt ein Führen des Wickeldrahtes 4 über die der dritte Phase zugeordneten Statorzähne Z9, Z10, Z211 und Z12, wobei diese Statorzähne ebenfalls einzeln nacheinander mittels des Wickeldrahtes 4 umwickelt werden. Vom Statorzahn Z12 aus wird der Wickeldraht 4 zum Kontaktierelement 6 zurückgeführt.

Wurde die Bewicklung aller Zähne des Stators gemäß dem vorstehend beschriebenen Verfahren durchgeführt, dann erfolgt die elektrische Kontaktierung der Phasenwicklungen untereinander dadurch, dass der um die metallischen Haken 6, 7 und 8 gelegte Wickeldraht durch einen Verschweißvorgang mit dem jeweiligen Haken elektrisch verbunden wird, um die gewünschte Dreieckschaltung der Phasenwicklungen fertig zu stellen.

Die elektrische Kontaktierung dieser Dreieckschaltung nach außen erfolgt über die jeweilige Leiterbahn 9, 10, 11 und den jeweiligen Anschluss 12, 13, 14 für einen Gegenkontakt.

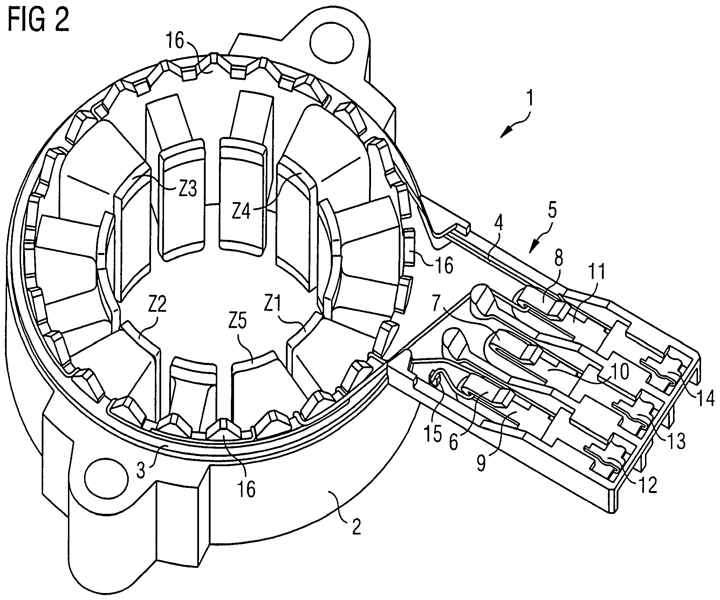

Die Figur 2 zeigt eine perspektivische Skizze zur weiteren Veranschaulichung des in der Figur 1 dargestellten Stators. In der Figur 2 sind einige der senkrecht auf der Isolierendscheibe 3 stehenden Zähne, zwischen denen der Wickeldraht 4 zur Bewicklung der Statorzähne hindurchgeführt wird, mit der Bezugszahl 16 bezeichnet. Ferner ist aus der Figur 2 besser ersichtlich, dass die Isolierendscheibe 3 auf der Oberseite des Statorkernes 2 positioniert ist. Weiterhin geht aus der Figur 2 anschaulich hervor, dass die Kontaktiervorrichtung 5 und die Isolierendscheibe 3 in Form eines einstückigen Kunststoffformteils hergestellt sind, und dass die Kontaktiervorrichtung 5 als Träger für die Haken 6, 7, 8, die Leiterbahnen 9, 10, 11 und die Anschlüsse 12, 13, 14 für einen Gegenkontakt dient.

Eine alternative, nicht in den Figuren dargestellte Ausführungsform der Erfindung besteht darin, den Wickeldraht 4 zunächst am Befestigungselement 15 zu befestigen, dann von dort aus direkt an die der ersten Phase zugeordneten Statorzähne zu deren aufeinander folgender Umwicklung zu führen, danach über ein erstes Kontaktierelement der Kontaktiervorrichtung zu führen, von dort aus an die der zweiten Phase zugeordneten Statorzähne zu deren aufeinander folgender Umwicklung zu führen, danach über ein zweites Kontaktierelement der Kontaktiervorrichtung zu führen, von dort aus an die der dritten Phase zugeordneten Statorzähne zu deren aufeinander folgenden Umwicklung zu führen und danach über ein drittes Kontaktierelement der Kontaktiervorrichtung zu führen.

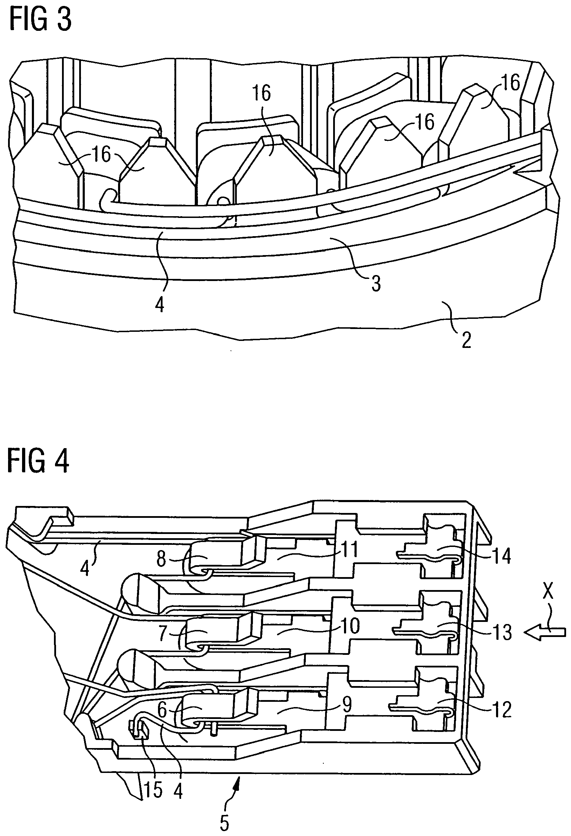

Die Figur 3 zeigt eine detailliertere Darstellung eines Teilbereichs des Stators im vollständig bewickelten Zustand. Aus dieser Darstellung geht insbesondere hervor, dass der Wickeldraht 4 zum Bewickeln eines Statorzahns durch einen Zahnzwischenraum zwischen zwei benachbarten Zähnen 16 zum jeweiligen Statorzahn geführt wird und nach dem Bewickeln des Statorzahnes durch einen anderen oder alternativ dazu auch durch denselben Zahnzwischenraum wieder nach außen geführt, umgelenkt und auf der Außenseite entlang der Zähne bis in den Bereich des nächsten Statorzahns derselben Phase geführt wird. Weiterhin geht aus der Figur 3 hervor, dass der Wickeldraht 4 an den Außenseiten der senkrecht von der Isolierendscheibe 3 nach oben stehenden Zähne 16 übereinander positioniert ist und unmittelbar aneinander anliegende Lagen aufweist, wobei die unterste Lage des Wickeldrahtes im ersten Wickelumlauf, die mittlere Lage des Wickeldrahtes im zweiten Wickelumlauf und die obere Lage des Wickeldrahtes im dritten Wickelumlauf gebildet wurde.

Die Figur 4 zeigt eine vergrößerte Darstellung der Kontaktiervorrichtung 5 des Stators. In dieser Darstellung ist gut erkennbar, dass es sich bei der Kontaktiervorrichtung um ein Kunststoffformteil handelt, welches parallel zueinander verlaufende Vertiefungen aufweist. In die in der Figur 4 gezeigten unteren Vertiefung 4 ist der Haken 6 eingesetzt, der über eine Leiterbahn 9 mit dem Anschluss 12 für einen Gegenkontakt verbunden ist. In die in der Figur 4 gezeigte mittlere Vertiefung ist der Haken 7 eingesetzt, der über eine Leiterbahn 10 mit dem Anschluss 13 für einen Gegenkontakt verbunden ist. In die in der Figur 4 gezeigte obere Vertiefung ist der Haken 8 eingesetzt, der über eine Leiterbahn 11 mit dem Anschluss 14 für einen Gegenkontakt verbunden ist.

Der Haken 6, die Leiterbahn 9 und der Anschluss 12 können in Form eines einstückigen Bauteils realisiert sein, welches einen durchgängig elektrisch leitfähigen Weg aufweist, der zur elektrischen Kontaktierung mit einem Gegenstecker notwendig ist, welcher in Richtung x in die Kontaktiervorrichtung 5 geführt wird. Auch der Haken 7, die Leiterbahn 10 und der Anschluss 13 können in Form eines einstückigen Bauteils realisiert sein. Dasselbe gilt für den Haken 8, die Leiterbahn 11 und den Anschluss 14.

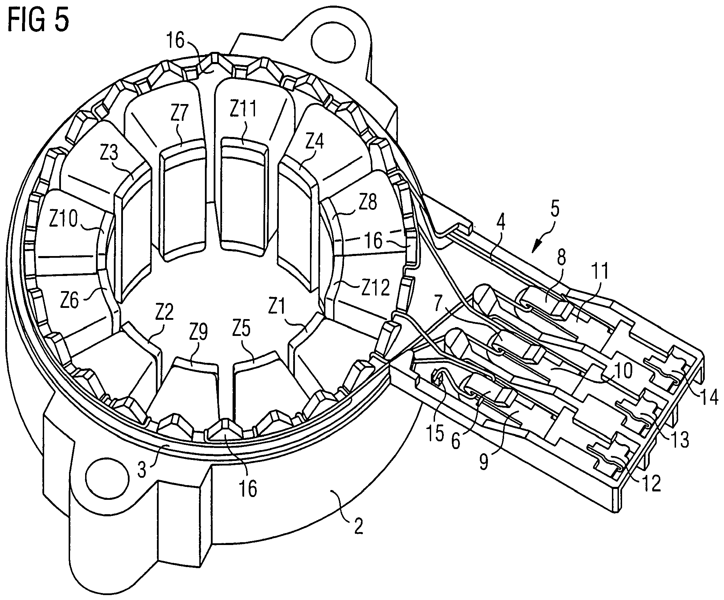

Die Figur 5 zeigt eine perspektivische Skizze zur Veranschaulichung des Stators im vollständig bewickelten Zustand, in welchem alle Zähne Z1 - Z12 vom Wickeldraht umwickelt sind. Aus dieser Darstellung ist insbesondere ersichtlich, dass der Wickeldraht 4 nach Umwicklung des Zahnes Z8 an den mittleren Haken 7 geführt wird, um diesen gelegt und dann wieder in Richtung des Zahnes Z9 umgelenkt wird. Weiterhin geht aus der Figur 5 hervor, dass nach Fertigstellung aller Phasenwicklungen der Wickeldraht 4 vom Statorzahn Z12 aus wieder an den Haken 6 zurückgeführt wird.

## Patentansprüche

1. Verfahren zum Bewickeln des Stators eines mehrphasigen Elektromotors, bei welchem jeder Phase mehrere voneinander beabstandete Statorzähne zugeordnet sind, wobei alle Zähne des Stators ohne eine Unterbrechung des Wickeldrahtes bewickelt werden und wobei der Wickeldraht jeweils vor oder nach der Bewicklung aller einer Phase zugeordneten Statorzähne über ein in Radialrichtung außerhalb des Statorkerns angeordnetes Kontaktierelement einer Kontaktiervorrichtung zur Herstellung einer Dreieckschaltung geführt wird.

2. Verfahren nach Anspruch 1 mit folgenden Schritten:
- Führen des Wickeldrahtes über ein erstes Kontaktierelement (6) einer Kontaktiervorrichtung (5),
- Führen des Wickeldrahtes über die der ersten Phase zugeordneten Statorzähne (Z1, Z2, Z3, Z4), wobei diese Statorzähne einzeln nacheinander mittels des Wickeldrahtes umwickelt werden,
- Führen des Wickeldrahtes über ein zweites Kontaktierelement (8) der Kontaktiervorrichtung (5), welches vom ersten Kontaktierelement elektrisch isoliert ist,
- Führen des Wickeldrahtes über die der zweiten Phase zugeordneten Statorzähne (Z5, Z6, Z7, Z8), wobei diese Statorzähne einzeln nacheinander mittels des Wickeldrahtes umwickelt werden,
- Führen des Wickeldrahtes über ein drittes Kontaktierelement (7) der Kontaktiervorrichtung (5), welches vom ersten und zweiten Kontaktierelement elektrisch isoliert ist,
- Führen des Wickeldrahtes über die der dritten Phase zugeordneten Statorzähne (Z9, Z10, Z11, Z12), wobei diese Statorzähne einzeln nacheinander mittels des Wickeldrahtes umwickelt werden.

3. Stator für einen mehrphasigen Elektromotor, mit
- einem Statorkern (2),
- einer Vielzahl von Statorzähnen (Z1 - Z12), wobei jeder Phase mehrere voneinander beabstandete Statorzähne zugeordnet sind, wobei
- alle Zähne des Stators von einem Wickeldraht (4) ohne eine Unterbrechung desselben bewickelt sind, wobei
- der Wickeldraht (4) jeweils vor oder nach der Umwicklung aller einer Phase zugehörigen Statorzähne über ein in Radialrichtung außerhalb des Statorkerns angeordnetes Kontaktierelement (6, 7, 8) zur Herstellung einer Dreieckschaltung geführt ist.

4. Stator nach Anspruch 3, **dadurch gekennzeichnet, dass** die Kontaktierelemente (6, 7, 8) Bestandteile einer Kontaktiervorrichtung (5) sind, die zur Kontaktierung der Statorwicklung mit externen Gegenkontakten dient.

5. Stator nach Anspruch 4, **dadurch gekennzeichnet, dass** der Statorkern (2) einen im Wesentlichen kreisförmigen Querschnitt hat.

6. Stator nach Anspruch 4 oder 5, **dadurch gekennzeichnet, dass** er eine auf der Oberseite des Statorkerns positionierte Isolierendscheibe (3) aufweist und dass die Kontaktiervorrichtung (5) und die Isolierendscheibe (3) ein einstückiges Kunststoffformteil bilden.

7. Stator nach einem der Ansprüche 3 - 6, **dadurch gekennzeichnet**, die Kontaktierelemente (6, 7, 8) Haken sind, die aus einem elektrisch leitfähigen Material bestehen.

8. Stator nach Anspruch 7, **dadurch gekennzeichnet, dass** die Haken (6, 7, 8) jeweils über einen elektrischen Leiter (9, 10, 11) mit einem Anschluss (12, 13, 14) für einen externen Gegenkontakt verbunden sind.

9. Stator nach einem der Ansprüche 3 - 8, **dadurch gekennzeichnet, dass** die Kontaktierelemente (6, 7, 8) der Kontaktiervorrichtung (5) zur internen elektrischen Verschaltung der Phasen des Elektromotors dienen.

10. Stator nach einem der Ansprüche 3 - 9, **dadurch gekennzeichnet, dass** die Isolierendscheibe (3) senkrecht darauf stehende Zähne (16) aufweist und der Wickeldraht (4) durch die Zwischenräume zwischen den Zähnen (16) geführt ist.

## Claims

1. Method for winding the stator of a multi-phase electric motor, in which a plurality of spaced-apart stator teeth are assigned to each phase, all teeth of the stator being wound without an interruption to the winding wire, and the winding wire in each case being passed, before or after all stator teeth assigned to a phase are wound, over a contacting element, arranged outside the stator core in a radial direction, of a contacting device, so as to produce a delta connection.

2. Method according to claim 1, comprising the following steps:
- passing the winding wire over a first contacting element (6) of a contacting device (5),
- passing the winding wire over the stator teeth (Z1, Z2, Z3, Z4) assigned to the first phase, these stator teeth being enwound individually in succession with the winding wire,
- passing the winding wire over a second contacting element (8) of the contacting device (5), which is electrically insulated from the first contacting element,
- passing the winding wire over the stator teeth (Z5, Z6, Z7, Z8) assigned to the second phase, these stator teeth being enwound individually in succession with the winding wire,
- passing the winding wire over a third contacting element (7) of the contacting device (5), which is electrically insulated from the first and second contacting elements,
- passing the winding wire over the stator teeth (Z9, Z10, Z11, Z12) assigned to the third phase, these stator teeth being enwound individually in succession with the winding wire.

3. Stator for a multi-phase electric motor, comprising a stator core (2),
- a plurality of stator teeth (Z1 - Z12), a plurality of spaced-apart stator teeth being assigned to each phase,
- all teeth of the stator being wound by one winding wire (4) without interruption thereto,
- the winding wire (4) in each case being passed, before or after all stator teeth assigned to a phase are enwound, over a contacting element (6, 7, 8), arranged outside the stator core in a radial direction, so as to produce a delta connection.

4. Stator according to claim 3, **characterised in that** the contacting elements (6, 7, 8) are components of a contacting device (5) which serves to contact the stator winding with external counter contacts.

5. Stator according to claim 4, **characterised in that** the stator core (2) has a substantially circular cross section.

6. Stator according to either claim 4 or claim 5, **characterised in that** it has an insulating end plate (3) positioned on the upper face of the stator core and **in that** the contacting device (5) and the insulating end plate (3) form a single-piece moulded plastics material part.

7. Stator according to any of claims 3 - 6, **characterised in that** the contacting elements (6, 7, 8) are hooks which consist of an electrically conductive material.

8. Stator according to claim 7, **characterised in that** the hooks (6, 7, 8) are each connected via an electrical conductor (9, 10, 11) to a terminal (12, 13, 14) for an external counter contact.

9. Stator according to any of claims 3 - 8, **characterised in that** the contacting elements (6, 7, 8) of the contacting device (5) are for internal electrical wiring of the phases of the electric motor.

10. Stator according to any of claims 3 - 9, **characterised in that** the insulating end plate (3) has teeth (16) positioned perpendicularly thereon and the winding wire (4) is passed through the gaps between the teeth (16).

## Revendications

1. Procédé de bobinage du stator d'un moteur électrique polyphasé, selon lequel plusieurs dents de stator espacées les unes des autres sont associées à chaque phase, selon lequel toutes les dents du stator sont bobinées sans interruption du fil de bobinage et selon lequel le fil de bobinage est guidé respectivement avant ou après le bobinage de toutes les dents du stator associées à une phase par un élément de contact d'un dispositif de contact disposé radialement à l'extérieur du noyau de stator pour réaliser un couplage en triangle.

2. Procédé selon la revendication 1, comprenant les étapes suivantes consistant à :
- guider le fil de bobinage par un premier élément de contact (6) d'un dispositif de contact (5),
- guider le fil de bobinage par les dents de stator (Z1, Z2, Z3, Z4) associées à la première phase, ces dents du stator étant bobinées individuellement l'une après l'autre au moyen du fil de bobinage,
- guider le fil de bobinage par un deuxième élément de contact (8) du dispositif de contact (5) qui est isolé électriquement du premier élément de contact,
- guider le fil de bobinage par les dents de stator (Z5, Z6, Z7, Z8) associées à la deuxième phase, ces dents du stator étant bobinées individuellement l'une après l'autre au moyen du fil de bobinage,
- guider le fil de bobinage par un troisième élément de contact (7) du dispositif de contact (5) qui est isolé électriquement des premier et deuxième éléments de contact,
- guider le fil de bobinage par les dents de stator (Z9, Z10, Z11, Z12) associées à la troisième phase, ces dents du stator étant bobinées individuellement l'une après l'autre au moyen du fil de bobinage.

3. Stator pour un moteur électrique polyphasé, comprenant
- un noyau de stator (2),
- une pluralité de dents de stator (Z1 à Z12), plusieurs dents de stator espacées les unes des autres étant associées à chaque phase, dans lequel
- toutes les dents du stator sont bobinées par un fil de bobinage (4) sans interruption de celui-ci, dans lequel
- le fil de bobinage (4) est guidé respectivement avant ou après le bobinage de toutes les dents de stator associées à une phase par un élément de contact (6, 7, 8) disposé radialement à l'extérieur du noyau du stator pour réaliser un couplage en triangle.

4. Stator selon la revendication 3, **caractérisé en ce que** les éléments de contact (6, 7, 8) sont des éléments constitutifs d'un dispositif de contact (5) qui sert à mettre le bobinage de stator en contact avec des contacts complémentaires externes.

5. Stator selon la revendication 4, **caractérisé en ce que** le noyau de stator (2) a une section transversale sensiblement circulaire.

6. Stator selon la revendication 4 ou 5, **caractérisé en ce qu'**il présente un disque d'extrémité isolant (3) positionné sur la face supérieure du noyau de stator et **en ce que** le dispositif de contact (5) et le disque d'extrémité isolant (3) forment une pièce moulée en matière plastique d'un seul tenant.

7. Stator selon l'une quelconque des revendications 3 à 6, **caractérisé en ce que** les éléments de contact (6, 7, 8) sont des crochets constitués d'un matériau électriquement conducteur.

8. Stator selon la revendication 7, **caractérisé en ce que** les crochets (6, 7, 8) sont reliés chacun par un conducteur électrique (9, 10, 11) à un raccordement (12, 13, 14) pour un contact complémentaire externe.

9. Stator selon l'une des revendications 3 à 8, **caractérisé en ce que** les éléments de contact (6, 7, 8) du dispositif de contact (5) servent au câblage électrique interne des phases du moteur électrique.

10. Stator selon l'une des revendications 3 à 9, **caractérisé en ce que** le disque d'extrémité isolant (3) présente des dents (16) se dressant perpendiculairement sur celui-ci et le fil de bobinage (4) est guidé à travers les espaces entre les dents (16).
